# EUROPÄISCHE PATENTSCHRIFT

(11) **EP 2 355 957 B1**
(45) Veröffentlichungstag und Bekanntmachung des Hinweises auf die Patenterteilung: **04.06.2014**
(21) Anmeldenummer: 09749010.6
(22) Anmeldetag: 02.11.2009
(51) Int. Cl.: B25J 9/16, G05B 9/02

(54) **VERFAHREN UND VORRICHTUNG ZUM STEUERN EINES MANIPULATORSYSTEMS**
METHOD AND DEVICE FOR CONTROLLING A MANIPULATOR SYSTEM
PROCÉDÉ ET DISPOSITIF DE COMMANDE D'UN SYSTÈME DE MANIPULATEUR

(30) Priorität: 09.12.2008 DE 102008061172
(43) Veröffentlichungstag der Anmeldung: 17.08.2011
(73) Patentinhaber: KUKA Roboter GmbH, 86165 Augsburg (DE)
(72) Erfinder: HASENZAHL, Torsten, 89407 Dillingen (DE)
(74) Vertreter: Schlotter, Alexander Carolus Paul
(86) Internationale Anmeldenummer: PCT/EP2009/007837
(87) Internationale Veröffentlichungsnummer: WO 2010/066318

(56) Entgegenhaltungen:
- EP-A1- 0 474 881
- EP-A2- 1 186 386
- EP-A2- 1 967 927
- Georg Becker, Robert Gassner, Maximilian Korff, et al.: "Safety Integrated:Systemhandbuch Sicherheitstechnik, 5 Ausgabe" 2005, Siemens AG , Erlangen, Germany , XP002564889 Kapitel 8, Seiten 9-12 Kapitel 1, Seiten 14-17 Abbildung 8/13

## Beschreibung

Die vorliegende Erfindung betrifft ein Verfahren und eine Vorrichtung zum Steuern eines Manipulatorsystems, insbesondere eines Robotersystems, welches wenigstens zwei antreibbare Achsen aufweist, ein Manipulatorsystem mit einer solchen Vorrichtung und ein Computerprogramm bzw. Computerprogrammprodukt zur Durchführung eines solchen Verfahrens.

Ein Manipulatorsystem umfasst allgemein einen oder mehrere Manipulatoren, insbesondere Roboter wie Industrie- oder Serviceroboter, und kann zusätzlich weitere manipulatorexterne bzw. Zusatzachsen aufweisen. Beispielsweise kann eine Schweißstation einen sechsachsigen Industrieroboter, der eine Schweißzange führt, sowie einen Drehtisch umfassen, auf dem zwei Werkstücke jeweils drehbar um eine antreibbare siebte bzw. achte Achse aufspannbar sind, so dass stets ein Werkstück vom Roboter bearbeitet und hierzu um die siebte bzw. achte Achse gedreht werden kann, während eine Bedienperson ein anderes Werkstück entnimmt bzw. neu einspannt. Nach der Bearbeitung und dem Einspannen des neuen Werkstückes dreht der Drehtisch um eine neunte Achse, so dass der Roboter das neu eingespannte Werkstück bearbeiten und die Bedienperson das bearbeitete Werkstück entnehmen kann.

Insbesondere, wenn Menschen mit einem Manipulatorsystem kooperieren, muss gewährleistet werden, dass sie bei einer Fehlfunktion der Steuerung des Systems nicht verletzt werden. Als Steuerung wird vorliegend verallgemeinernd auch eine Regelung bezeichnet, die Steuerbefehle an Aktoren des Manipulatorsystems, insbesondere zum Antreiben seiner Achsen, auf Basis rückgeführter Ist-Werte und ihrem Vergleich mit vorgegebenen Soll-Werten, ausgibt. Hierbei kann es sichbeispielsweise um eine programmierbare Roboter- oder übergeordnete Prozesssteuerung handeln.

Um bei einer unplanmäßigen Bewegung des Manipulatorsystems unabhängig von der Steuerung, die beispielsweise aufgrund von Rechen-, Mess- oder Modellfehlern falsche Steuerbefehle ausgibt, die Sicherheit zu gewährleisten, ist es aus der Norm EN 60204-1 bekannt, die Antriebe unmittelbar beim Erkennen des Fehlers von der Energieversorgung zu trennen (sogenannter "STOP O"), wobei zum Abbremsen bzw. Stillsetzen der Achsen allenfalls die noch im Manipulator vorhandene Restenergie genutzt werden kann, um einfallende mechanische Bremsen motorisch zu unterstützen, oder die Antriebe zum Aufbringen von Bremskräften weiterhin mit Energie zu versorgen und erst nach dem Stillsetzen von der Energieversorgung zu trennen (sogenannter "STOP 1"). Zur strafferen Darstellung werden vorliegend auch gegensinnig parallele Kräfte, i.e. Drehmomente verallgemeinernd als Kräfte bezeichnet, so dass beispielsweise unter einem Kraftsensor auch ein Drehmomentsensor verstanden wird.

Die EP 1 935 953 B1 schlägt hierzu vor, einen Roboter in eine Sicherheitsposition zu fahren und in dieser alle Achsen des Roboters auf Stillstand zu überwachen, wenn eine Bedienperson einen Schutzraum betritt, und die Energieversorgung zu allen Antrieben zu unterbrechen, um einen STOP 1 auszuführen, wenn wenigstens eine Achse sich in der Sicherheitsposition unplanmäßig bewegt.

Nachteilig erfordert hier bereits die Verletzung einer Stillstandsüberwachung durch eine Achse des Roboters eine aufwändige Wiederaufnahme des Betriebs nach dem kompletten STOP 1 aller Achsen. Weitere Achsen eines Manipulatorsystems, insbesondere manipulatorexterne Achsen werden überhaupt nicht berücksichtigt.

G. Becker, R. Gassner, M. Korff et al., "Safety Integrated: Systemhandbuch Sicherheitstechnik", Siemens AG, Erlangen, schlagen für Vorschub- und Schleichscheibenspindelantrieb einer Schleifmaschine unterschiedliche Stop-Reaktionen vor. Die EP 1 967 927 A2 lehrt, nach einem aktiven Abbremsen durch eine Motorverzögerungssteuerung Bremsen zu aktivieren und so insbesondere Vertikalachsen sicher stillzusetzen. In der EP 0 474 881 A1 werden bei einem Ansprechen einer Überwachung alle Motoren vom Strom getrennt.

Aufgabe der vorliegenden Erfindung ist es daher, den Betrieb eines Manipulatorsystems, insbesondere eines Robotersystems, zu verbessern.

Diese Aufgabe wird durch ein Verfahren mit den Merkmalen des Anspruchs 1 bzw. eine Vorrichtung nach Anspruch 10 zur Durchführung eines solchen Verfahrens gelöst.

Anspruch 11 stellt ein Manipulatorsystem mit einer solchen Vorrichtung, Anspruch 13 ein Computerprogramm zur Durchführung eines solchen Verfahrens, Anspruch 14 ein Computerprogrammprodukt, insbesondere ein Speichermedium oder Datenträger mit einem solchen Computerprogramm unter Schutz. Die Unteransprüche betreffen vorteilhafte Weiterbildungen.

Ein erfindungsgemäßes Manipulatorsystem umfasst einen oder mehrere Manipulatoren, insbesondere Roboter, und weist wenigstens zwei antreibbare Achsen auf, die hierzu mit einer Energieversorgung verbunden sind.

Die Achsen können zum einen Achsen des bzw. der Manipulatoren sein, die zur Bewegung eines Arbeitspunktes des Manipulators, insbesondere seines Werkzeug-Referenzkoordinatensystems, des sogenannten Tool Center Points dienen. Beispielsweise kann ein Schweißroboter sechs Drehachsen aufweisen, die einzeln durch mit der Energieversorgung verbundene Elektromotoren antreibbar sind, ein Palletierroboter vier Drehachsen, von denen die erste und vierte parallel zueinander, die zweite und dritte parallel zueinander und senkrecht zur ersten Achse ausgerichtet sind.

Zusätzlich kann das Manipulatorsystem eine oder mehrere manipulatorexterne Achsen aufweisen, die insbesondere zur Bewegung eines Werkstücks vorgesehen sein können. So kann beispielsweise der einleitend beschriebene Wendepositionierer eine Drehtischachse sowie weitere Drehachsen zur Positionierung von Werkstücken auf dem Drehtisch aufweisen.

Eine Achse beschreibt dabei vorliegend verallgemeinernd eine Bewegungsmöglichkeit bzw. einen aktuierbaren Freiheitsgrad des Manipulatorsystems. So beschreibt eine Drehachse, welche beispielsweise durch einen Elektromotoren antreibbar sein kann, einen Drehfreiheitsgrad, eine Linearachse, die beispielsweise durch einen Linearmotor oder über ein Getriebe durch einen Elektromotoren antreibbar sein kann, einen translatorischen Freiheitsgrad.

Erfindungsgemäß wird nun vorgeschlagen, eine oder mehrere Achsen des Manipulatorsystems gezielt auszuwählen und diese auf Stillstand zu überwachen. Falls erfasst wird, dass eine dieser ausgewählten Achsen nicht stillsteht, wird diese Achse gezielt von ihrer Energieversorgung getrennt, während neuerungsgemäß die nicht ausgewählten Achsen weiter mit der Energieversorgung verbunden bleiben. Auf diese Weise wird der unnötige STOP 1 aller Achsen, also auch solcher, die nicht zur Stillstandsüberwachung ausgewählt wurden, da sie beispielsweise nicht sicherheitsrelevant sind, und der damit verbundene Aufwand bei einer Wiederaufnahme des Betriebs vermieden. Die nicht ausgewählten Achsen können vorteilhaft weiterhin in vorgegebener Weise angesteuert werden und beispielsweise eine geplante Bewegung zu Ende führen.

Bei dem einleitend erläuterten Beispiel einer Schweißzelle kann sich der Schweißroboter und das von ihm gerade zu bearbeitende Werkstück beispielsweise in einem gegen Zutritt geschützten Arbeitsraum befinden, während die Bedienperson das andere Werkstück in einer Handeinlegestation entnimmt bzw. neu einspannt. Somit kann die Bedienperson nur durch eine unplanmäßige Bewegung der Achse zur Drehung des gerade zu entnehmenden bzw. einzuspannenden Werkstückes, gegebenenfalls durch eine unplanmäßige Bewegung des Drehtisches verletzt werden. In diesem Beispiel können daher vorzugsweise diese Achsen ausgewählt und auf Stillstand überwacht werden. Kommt es zu einer unplanmäßige Bewegung einer dieser ausgewählten Achsen, wird die entsprechende Achse von der Energieversorgung getrennt, um unabhängig von der Steuerung des Manipulatorsystems sicherzustellen, dass die Bedienperson nicht verletzt wird. Die nicht ausgewählten Achsen des Schweißroboters und des von ihm zu bearbeitenden Werkstückes im Arbeitsraum verbleiben hingegen in der vorgegebenen Steuerung und werden hierzu weiter mit Energie versorgt. Hierdurch kann im Gegensatz zu einer Trennung aller Antriebe von der Energieversorgung vorteilhaft ein Festbrennen von Schweißdraht verhindert werden.

In einer bevorzugten Ausführung der vorliegenden Erfindung wird die ausgewählte Achse unmittelbar von der Energieversorgung getrennt, sobald erfasst wird, dass diese Achse nicht stillsteht, i.e. ein STOP 0 für diese Achse durchgeführt. Dadurch kann vorteilhaft eine hohe Sicherheit unabhängig von Fehlern der Steuerung gewährleistet werden.

Alternativ kann die ausgewählte Achse auch erst von der Energieversorgung getrennt werden, nachdem diese Achse unter Energieversorgung stillgesetzt worden ist, i.e. ein STOP 1 für diese Achse durchgeführt werden. Dadurch kann vorteilhaft die Abbremszeit zur Stillsetzung der unplanmäßig bewegten Achse reduziert werden. In beiden Fällen fällt vorzugsweise eine mechanische Bremse ein, sobald erfasst wird, dass diese Achse nicht stillsteht, oder sobald die unplanmäßig bewegten Achse unter Energieversorgung erneut stillgesetzt worden ist, um die Abbremszeit weiter zu reduzieren bzw. die Achse sicher stillzuhalten und gegen einen unerwarteten Anlauf zu schützen.

Beide vorgenannte Alternativen können vorteilhaft miteinander kombiniert sein, indem die ausgewählte Achse unter Energieversorgung stillgesetzt, i.e. ein STOP 1 ausgeführt wird, falls erfasst wird, dass diese Achse aufgrund einer äußeren Störung, beispielsweise einer Berührung durch eine Bedienperson oder eine Kollision mit einem bewegten Hindernis nicht stillsteht, während andernfalls die ausgewählte Achse von der Energieversorgung getrennt, i.e. ein STOP 0 ausgeführt wird, sobald erfasst wird, dass diese Achse nicht stillsteht. Somit kann vorteilhaft die Abbremszeit unter Ausnutzung des hierzu entsprechend angesteuerten Antriebs der Achse reduziert werden, wenn die Steuerung und der Antrieb als solche korrekt funktionieren und die Bewegung der Achse aus einer äußeren Störung resultiert, beispielsweise der Bediener das zu entnehmende Werkstück in der Handeinlegestation gewaltsam um seine Werkstückachse dreht. Wenn hingegen nicht festgestellt werden kann, dass eine äußere Störung für die unplanmäßige Bewegung verantwortlich ist, besteht die Gefahr, dass die Steuerung nicht korrekt funktioniert und daher auch nicht zuverlässig zum Abbremsen eingesetzt werden kann, so dass in diesem Falle ein STOP 0 unter unmittelbarer Trennung von der Energieversorgung und Einfallen mechanischer Bremsen durchgeführt wird.

Die Entscheidung kann dabei gleichermaßen auf Basis eines Signals, welches anzeigt, ob Steuerung und Antrieb korrekt funktionieren, oder auf Basis eines Signals getroffen werden, welches eine äußere Störung anzeigt und beispielsweise von einem Kraftsensor zur Erfassung zusätzlicher äußerer Kräfte oder dergleichen generiert werden kann.

Die Aktivierung der Stillstandsüberwachung und/oder die überwachte Stillstandsposition der ausgewählten Achse ist bevorzugt in Abhängigkeit von einem Zustand des Manipulatorsystems, einer Position eines Manipulators, der Zeit und/oder einer Benutzereingabe variabel vorgebbar.

Ein Zustand des Manipulatorsystems kann beispielsweise den Öffnungs- bzw. Schließzustand von Schutztüren zu Arbeitsräumen oder dergleichen umfassen. Solange etwa beide Schutztüren zum Arbeitsraum hinter einem vierachsigen Palletierroboter und zu einem Bereich vor dem Roboter geschlossen ist, wird keine Achse auf Stillstand überwacht. Wird die Tür zum Bereich vor dem Roboter geöffnet, wird seine erste vertikale Drehachse auf Stillstand überwacht, um zu verhindern, dass der Palletierroboter durch Drehung um diese Achse diesen Bereich mit seinem Greifer verletzt. Wird hingegen die Tür zum Arbeitsraum geöffnet, wird seine zweite und dritte horizontale Drehachse in einer Stillstandsposition überwacht, die einer maximalen vertikalen Streckung des Roboters entspricht, um jedenfalls den Arbeitsraum unter dem gestreckten Roboter zu sichern.

Eine Position des Manipulators kann beispielsweise durch die Lage und/oder Orientierung eines manipulatorfesten Koordinatensystems, insbesondere seines Tool Center Points (TCP), durch die Stellungen seiner Antriebe oder Glieder oder dergleichen beschrieben werden, welche entsprechend der Übersetzungsverhältnise von Getrieben zwischen Antrieb und angetriebenem Manipulatorglied bzw. durch Lösen der Vorwärts- bzw. Rückwärtskinematik ineinander transformiert werden können. Auch in Abhängigkeit einer solchen Position können die Achsen, die auf Stillstand überwacht werden, und/oder die Stillstandspositionen, in denen diese auf Stillstand überwacht werden, variabel vorgegeben sein. So kann beispielsweise eine Bahn bzw. Trajektorie eines Manipulators einen oder mehrere Betriebshalte vorsehen, in denen eine oder mehrere der ausgewählten Achsen sicher stillgesetzt und gegen unerwarteten Anlauf gesichert sein sollen. Erreicht der Manipulator einen solchen Betriebshalt, werden die entsprechenden Achsen auf Stillstand überwacht, bis der Manipulator diesen Betriebshalt planmäßig wieder verlässt.

Beispielsweise soll eine sechste Werkzeugachse eines Industrieroboters sich während eines Werkzeugwechsels nicht bewegen, während sich die übrigen Achsen zum Anfahren der Werkzeugablage- bzw. -aufnahmeposition bewegen. Daher wird für jeden Betriebshalt zum Werkzeugwechsel eine individuelle, von der Position des Manipulators abhängige Stillstandsposition der Werkzeugachse vorgegeben und überwacht, in der der Manipulator das alte Werkzeug ablegen bzw. das neue aufnehmen kann. Diese Stillstandspositionen hängen von dem jeweiligen Werkzeug und damit von der Position des Roboters relativ zu einem Werkzeugwechselschrank oder dergleichen ab.

Manipulatoren fahren häufig vorgegebene Trajektorien zeitlich präzise ab. Daher können zusätzlich oder alternativ zu Manipulatorpositionen die zu überwachenden Achsen bzw. Stillstandspositionen auch in Abhängigkeit von der Zeit vorgegeben werden. Dies gestattet beispielsweise auch, bestimmte Arbeitsräume zeitlich befristet gegen eine Verletzung zu schützen.

Eine Überwachung kann gleichermaßen auch durch eine Bedienperson oder von einer Prozesssteuerung initialisiert werden, indem eine entsprechende Eingabe erfolgt, wenn beispielsweise ein Wartungstechniker eine bestimmte Achse zeitweilig sicher stillhalten und gegen unerwarteten Anlauf schützen möchte.

Eine Stillstandsüberwachung kann beispielsweise dadurch realisiert werden, dass zu Beginn der Stillstandsüberwachung eine Ist-Position der ausgewählten Achse bzw. Achsen als Soll-Stillstandsposition erfasst und abgespeichert wird. Während der Stillstandsüberwachung wird dann eine aktuellen Ist-Position der ausgewählten Achse(n) erfasst und mit der Soll-Stillstandsposition verglichen. Übersteigt die Differenz zwischen aktueller Ist-Position und Soll-Stillstandsposition einen vorgebbaren Grenzwert, so wird festgestellt, dass sich die entsprechende Achse über einen durch den Grenzwert vorgebbaren Toleranzbereich hinaus bewegt, und die Achse wird von ihrer Energieversorgung getrennt. Dieses "Einfrieren" der Ist-Position als zu haltende Soll-Position zu Beginn der Stillstandsüberwachung gestattet vorteilhaft die sukzessive Überwachung unterschiedlicher Stillstandspositionen und ist sowohl für absolute als auch insbesondere für relative Messeinrichtungen zur Erfassung der Ist-Position einer Achse, beispielsweise inkrementale Drehgeber oder Resolver geeignet.

Während der Überwachung auf Stillstand kann eine mechanische Bremse auf die ausgewählte Achse wirken. Verbleibt die Achse auch bei eingefallener mechanischer Bremse in der Stillstandsüberwachung bzw. wird diese mit oder nach Einfallend er Bremse aktiviert, kann so ein Durchrutschen der Bremse erfasst werden. Vorteilhaft können durch die erfindungsgemäße Auswahl und Überwachung bestimmter Achsen gezielt Bremsen überwacht bzw. überprüft werden.

Vorstehend wurde die vorliegende Erfindung im Wesentlichen mit Bezug auf eine ausgewählte, zu überwachende Achse erläutert. Wie sich bereits aus dem Beispiel des Wendepositionierers ergibt, können in einer vorteilhaften Weiterbildung auch mehrere Achsen des Manipulatorsystems als eine Gruppe ausgewählt und überwacht werden, beispielsweise die Drehachse des Drehtisches und die beiden Werkstückdrehachsen. Falls erfasst wird, dass eine dieser Achsen nicht stillsteht, wird diese Achse von ihrer Energieversorgung getrennt, während die nicht ausgewählten Achsen weiter mit der Energieversorgung verbunden bleiben. Die anderen Achsen der ausgewählten Gruppe können gleichermaßen weiter mit der Energieversorgung verbunden bleiben oder auch von ihrer Energieversorgung getrennt werden.

Weitere Vorteile und Merkmale ergeben sich aus den Unteransprüchen und den Ausführungsbeispielen. Hierzu zeigt, teilweise schematisiert:
- Fig. 1:: ein Manipulatorsystem nach einer ersten Ausführung der vorliegenden Erfindung;
- Fig. 2:: den Ablauf eines Verfahrens zum Steuern des Manipulatorsystems der Fig. 1 nach einer Ausführung der vorliegenden Erfindung; und
- Fig. 3:: ein Manipulatorsystem nach einer zweiten Ausführung der vorliegenden Erfindung.

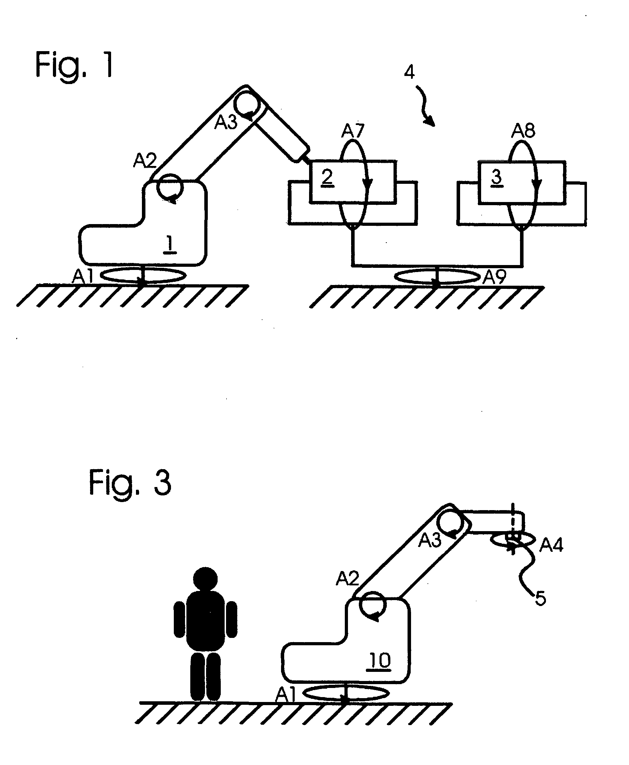

Fig. 1 zeigt ein Manipulatorsystem nach einer ersten Ausführung der vorliegenden Erfindung in Form einer Schweißzelle mit Wechselpositionierer. Es umfasst einen sechsachsigen Industrieroboter 1, der in seinem Arbeitspunkt eine Schweißzange zur Bearbeitung von Werkstücken 2, 3 aufweist. Aus Gründen der Übersichtlichkeit sind nur die ersten drei Achsen A1, A2, A3 des Roboters 1 eingezeichnet.

Der Wechselpositionierer in Form eines Drehtisches 4 kann zwei Werkstücke 2, 3 derart aufnehmen, dass diese motorisch um ihre horizontale Werkstückachse A7, A8 gedreht werden können. Der Drehtisch 4 kann seinerseits motorisch um die weitere manipulatorexterne vertikale Achse A9 gedreht werden, um die Werkstücke zwischen einem Arbeitsraum des Roboters 1 (links in Fig. 1) und einer Handeinlegestation (rechts in Fig. 1) zu wechseln. In dieser entnimmt eine Bedienperson ein bearbeitetes Werkstück 3 und spannt ein neues, zu bearbeitendes ein, während der Roboter 1 das gegenüberliegende Werkstück 2 im Arbeitsraum bearbeitet. Während dieses Werkstückwechsels muss sichergestellt werden, dass jedenfalls die Werkstückachse A8 sich nicht bewegt, um eine Verletzung der Bedienperson zu verhindern.

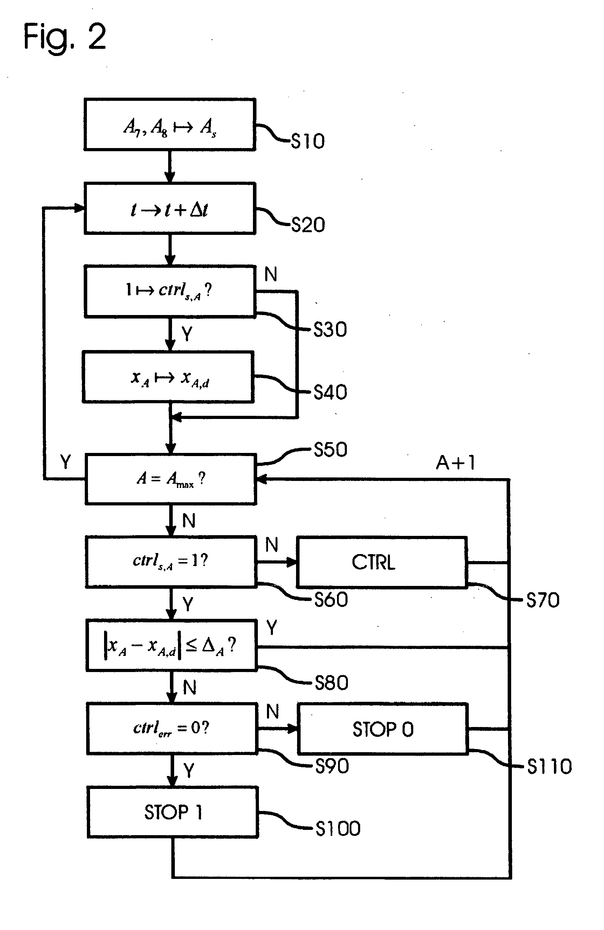

Hierzu führt eine in die Steuerung des Roboters 1 integrierte Vorrichtung ein Verfahren nach einer Ausführung der vorliegenden Erfindung aus, welches vereinfacht in Fig. 2 dargestellt ist.

In einem ersten Schritt S10, der im Ausführungsbeispiel vor Inbetriebnahme des Roboters 1, beispielsweise während der Programmierung des Schweißprozesses, durchgeführt wird, werden die zu überwachenden Achsen ausgewählt, im Ausführungsbeispiel etwa die manipulatorexternen Werkstückachsen A7 und A8. In einer abgewandelten Ausführung kann zusätzlich auch die Achse des Drehtisches 4 ausgewählt werden, in einer weiteren Abwandlung die Auswahl der zu überwachenden Achsen auch während des Betriebs des Manipulatorsystems erfolgen.

Während das Manipulatorsystem den Schweißprozess abarbeitet, indem getaktet ein Werkstück 2 im Arbeitsraum vom Roboter 1 bearbeitet und anschließend mittels Drehtisch 4 durch ein neues Werkstück 3 ersetzt wird, läuft das in den Schritten S20 bis S110 dargestellte Verfahren periodisch ab, wie durch die Inkrementierung *t* → *t* + Δ*t* in Schritt S20 und die Rückkehr zu diesem Schritt angedeutet.

Während eines Programmdurchlaufes wird in einem Schritt S30 für alle ausgewählten Achsen geprüft, ob eine Überwachung einer oder mehrerer Achsen Aₛ aktiviert worden ist, indem geprüft wird, ob eine entsprechender Eingabebefehl 1 ↦ *ctrl_{s,A}* empfangen wurde, der einen Kennzeichner *ctrl_{s, A}* auf den Wert "1" setzt, um die Aktivierung der Überwachung anzuzeigen. Ein solcher Eingabebefehl kann beispielsweise zyklisch in der Taktung des Werkstückwechsels von einer Prozesssteuerung generiert werden, in Abhängigkeit von der Position des Roboters 1 aktiviert werden, wenn der Roboter 1 das Werkstück 2 zur Bearbeitung anfährt, während der ein Wechsel des Werkstückes 3 erfolgen soll, oder von der Bedienperson eingegeben werden, wenn sie das Werkstück 3 wechseln möchte.

Im in Fig. 1 dargestellten Zustand wird in Schritt S30 die Stillstandsüberwachung für die Achse A8 aktiviert, um das Werkstück 3 gefahrlos wechseln zu können. Dementsprechend wird die aktuelle Ist-Position *x_{A}* der Achse A8, i.e. ihre Drehlage, durch einen inkrementalen Drehgeber erfasst und in Schritt S40 als Soll-Stillstandsposition *x_{A, d}* abgespeichert. In der nicht dargestellten abgewandelten Ausführung wird entsprechend zusätzlich auch die aktuelle Ist-Position der Achse A9 des Drehtisches 4 erfasst und als Soll-Stillstandsposition für diese Achse abgespeichert. Der bzw. die Schritte S40 werden dabei bei jeder Aktivierung der Stillstandsüberwachung nur einmal ausgeführt, sobald ein entsprechender Eingabebefehl empfangen wurde.

Während der anschließenden Stillstandsüberwachung wird, wie in Fig. 2 durch die zu Schritt S50 rückkehrende Schleife angedeutet, für alle Achsen des Manipulatorsystems oder alternativ nur für alle ausgewählten Achsen, im Ausführungsbeispiel die Achsen A7, A8, im abgewandelten Ausführungsbeispiel die Achsen A7 bis A9, in einem Schritt S60 geprüft, ob der Kennzeichner *ctrlₛ, _{A}* den Wert "1" aufweist, i.e. die Stillstandsüberwachung für diese Achse derzeit aktiviert ist.

Für die erste ausgewählte Achse A7 ist dies im in Fig. 1 dargestellten Zustand nicht der Fall, diese soll sich gerade bewegen, um das Werkstück 2 geeignet zu positionieren. Daher ist die Entscheidung in Schritt S60 negativ ("N") und das Verfahren fährt für diese Achse mit Schritt S70 fort, in dem die Bewegung der Achse A7 in vorgegebener Weise, beispielsweise in Abhängigkeit von der Position des Roboters 1 oder entsprechend eines vorgegebenen Zeitprofils gesteuert ("CTRL") wird und ihr Antrieb wie auch die Antriebe der Achsen A1 bis A6 des Schweißroboters 1 mit Energieversorgung verbunden bleiben. Anschließend kehrt das Programm zu Schritt S50 zurück und führt diesen für die nächste Achse A8 durch.

Da die Stillstandsüberwachung für diese Achse aktiviert ist, ist die Entscheidung in Schritt S60 positiv ("Y") und das Verfahren fährt mit Schritt S80 fort, in dem geprüft wird, ob die Differenz |*x_{A}* - *x_{A,d}*| zwischen einer in diesem Zeitschritt erfassten Ist-Position *x_{A}* der Achse A8 und ihrer zu Beginn der Stillstandsüberwachung bei Eingabe des Aktivierungsbefehls in Schritt S30 "eingefrorenen" Soll-Stillstandsposition *x_{A, d}* einen vorgegebenen Grenzwert Δ*_{A}* nicht übersteigt. Ist dies der Fall (S80: "Y"), bewegt sich die Achse A8 im Rahmen der durch den Grenzwert vorgegebenen Toleranz nicht, die Achse verbleibt daher in der normalen Steuerung, die weiterhin den Betriebshalt aufrechterhält, und hierzu mit der Energieversorgung verbunden bleibt.

Übersteigt die Differenz |*x_{A}* - *x_{A,d}*| jedoch den Grenzwert (580 "N"), i.e. bewegt sich die Werkstückachse A8 in unzulässiger Weise, wird in einem Schritt S90 geprüft, ob eine externe Störung vorliegt und die Steuerung des Manipulatorsystems als solches korrekt arbeitet, indem beispielsweise ein Kontroll-Kennzeichner *ctrlₑᵣᵣ* überprüft wird, der mit dem Wert "0" eine korrekte Funktion der Steuerung anzeigt.

Hierzu kann beispielsweise ein Kraftsensor äußere, auf die Achse A8 einwirkende Kräfte erfassen. Wird eine solche Kraft, im Ausführungsbeispiel ein Drehmoment, erfasst, da beispielsweise die Bedienperson unplanmäßig versucht, das eingespannte Werkstück 3 mit Gewalt um seine stillgesetzte Achse A8 zu drehen, liegt die erfasste Bewegung nicht an einer Störung der Steuerung, diese arbeitet vielmehr einwandfrei und kann zum Wiederabbremsen der Achse A8 genutzt werden. Hierzu wird der Kontroll-Kennzeichner *ctrlₑᵣᵣ* vom Kraftsensor entsprechend aktiv auf "0" gesetzt, so dass in Schritt S90 die Entscheidung positiv ist (S90: "Y"). Dann wird in Schritt S100 ein STOP 1 ausgeführt, indem die Steuerung des Manipulatorsystems den Antrieb der Achse A8 ansteuert, um diese stillzusetzen, und den Antrieb anschließend von seiner Energieversorgung trennt.

Kann hingegen eine einwandfreie Funktion der Steuerung nicht gewährleistet werden, fällt in Schritt S90 die Entscheidung negativ aus (S90: "N"). Dann wird in Schritt S110 ein STOP 0 ausgeführt, indem der Antrieb der Achse A8 von seiner Energieversorgung getrennt wird. Sowohl beim STOP 0 als auch beim STOP 1 fallen zusätzlich mechanische Bremsen ein, um die Achse A8 stillzusetzen und eine Verletzung der Bedienperson zu verhindern, sobald in Schritt S80 eine negative Entscheidung getroffen wird.

Nachdem die Achse A8 abgearbeitet ist, wird in analoger Weise Achse A9 überprüft.

Somit führt im ersten Ausführungsbeispiel etwa ein gewaltsame Drehung des Werkstückes 8 durch die Bedienperson nicht dazu, dass für alle Achsen, insbesondere die nicht ausgewählten Achsen A1 bis A6 des Roboters 1, ein STOP 1 durchgeführt wird, bei dem die Gefahr besteht, dass der Schweißdraht festbrennt. Vielmehr kann der Roboter 1 die Bearbeitung des Werkstückes 2 ungestört fortsetzen, da seine Achsen nicht zur Überwachung ausgewählt wurden und auch bei aktivierter Stillstandsüberwachung in der Steuerung verbleiben. Insofern kann erfindungsgemäß durch gezielte Auswahl der zu überwachenden Achsen der Betrieb des Manipulatorsystems verbessert werden.

Fig. 3 zeigt ein Manipulatorsystem nach einer zweiten Ausführung der vorliegenden Erfindung in Form eines Palletierroboters 10 mit einer ersten vertikalen Drehachse A1, zwei horizontalen Drehachsen A2, A3 sowie einer vierten vertikalen Drehachse A4.

Solange eine Bedienperson sich, wie in Fig. 3 dargestellt, vor dem Palletierroboter 10 befindet, soll die Achse A1 sicher stillstehen, um eine Gefährdung der Bedienperson auszuschließen. Hierzu wird, wie vorstehend mit Bezug auf Fig. 1, 2 erläutert, gezielt nur die Achse A1 als zu überwachende Achse ausgewählt, ihre Ist-Position bei Aktivierung der Stillstandsüberwachung als Soll-Stillstandsposition abgespeichert und diese Achse A1 in einem STOP 0 oder STOP 1 stillgesetzt, falls ihre Bewegung einen Toleranzbereich überschreitet. Die übrigen Achsen A2 bis A4 verbleiben auch bei unplanmäßiger Bewegung der Achse A1 in der Steuerung und mit ihrer Energieversorgung verbunden, so dass der Palletierroboter 10 auch in diesem Fall beispielsweise eine gegriffene Last kontrolliert absetzen kann.

In einer Abwandlung dieses Ausführungsbeispiels wirken in einer Halteposition mechanische Bremsen auf die Achsen A1 bis A4 des Roboters 10. Als zu überwachende Achsen sind nun die horizontalen Achsen A2, A3 ausgewählt und aktiviert. Rutschen diese nach Aktivierung der Stillstandsüberwachung durch, i.e. sackt der Arm des Palletierroboters 10 bei eingefallenen Bremsen beispielsweise aufgrund einer zu schweren Nutzlast durch, wird dies vorteilhaft erkannt und führt zu einem STOP 1 der entsprechenden Achse, die hierzu zusätzlich motorisch gebremst wird.

In einer weiteren Abwandlung des zweiten Ausführungsbeispiels soll der Palletierroboter mit seinem Werkzeug eine Bahn parallel zu einem Zaun abfahren, welcher konzentrisch zu seiner ersten vertikalen Drehachse A1 angeordnet ist. Um sicherzustellen, dass sein Werkzeugflansch 5 nicht von dieser parallelen Bahn abweicht, werden nach Anfahren einer Ausgangsposition, in der der Werkzeugflansch 5 den gewünschten horizontalen Abstand zum Zaun aufweist, die beiden horizontalen Achsen A2, A3 ausgewählt und ihre Stillstandsüberwachung aktiviert, wie dies vorstehend mit Bezug auf die Achse A8 des ersten Ausführungsbeispiels erläutert wurde. Anschließend kann der Roboter 10 die Bahn abfahren, wobei durch die Stillstandsüberwachung der gezielt ausgewählten, horizontalen Drehachsen A2, A3 sichergestellt ist, dass der Flansch 5 den Zaun nicht unplanmäßig berührt.

### Bezugszeichenliste

- 1: Schweißroboter
- 2, 3: Werkstück
- 4: Drehtisch
- 5: Werkzeugflansch
- 10: Palletierroboter
- A1 - A6: Roboterachsen
- A7 - A9: Drehtischachsen

## Patentansprüche

1. Verfahren zum Steuern eines Manipulatorsystems, insbesondere eines Robotersystems, welches wenigstens zwei antreibbare Achsen (A1 - A9; A1 - A4) aufweist, die hierzu mit einer Energieversorgung verbunden sind, mit den Schritten:
- Auswählen einer Achse des Manipulatorsystems (S10), die sicher stillgesetzt und gegen unerwarteten Anlauf gesichert sein soll;
- Überwachen der ausgewählten Achse auf Stillstand (S80), wobei die Aktivierung der Stillstandsüberwachung und/oder die überwachte Stillstandsposition der ausgewählten Achse in Abhängigkeit von einem Zustand des Manipulatorsystems, einer Position eines Manipulators (1; 10), der Zeit und/oder einer Benutzereingabe (1↦ctrl_{s,A}) variabel vorgebbar ist; und
- Trennen der überwachten Achse von einer Energieversorgung (S100, S110), falls erfasst wird, dass diese Achse nicht stillsteht, wobei wenigstens eine nicht ausgewählte Achse weiter mit der Energieversorgung verbunden bleibt (S70).

2. Verfahren nach Anspruch 1, **dadurch gekennzeichnet, dass** die ausgewählte Achse von der Energieversorgung getrennt wird, sobald erfasst wird, dass diese Achse nicht stillsteht (S110).

3. Verfahren nach Anspruch 1, **dadurch gekennzeichnet, dass** die ausgewählte Achse erst von der Energieversorgung getrennt wird, nachdem diese Achse unter Energieversorgung stillgesetzt worden ist (S100).

4. Verfahren nach Anspruch 2 und 3, **dadurch gekennzeichnet, dass** die ausgewählte Achse unter Energieversorgung stillgesetzt wird (S100), falls erfasst wird, dass diese Achse aufgrund einer äußeren Störung nicht stillsteht, und dass andernfalls die ausgewählte Achse von der Energieversorgung getrennt wird, sobald erfasst wird, dass diese Achse nicht stillsteht (S110).

5. Verfahren nach einem der vorhergehenden Ansprüche, **dadurch gekennzeichnet, dass** wenigstens eine von den auswählbaren Achsen eine Achse (A1-A6, A1-A4) zur Bewegung eines Arbeitspunktes eines Manipulators des Manipulatorsystems ist, und wenigstens eine andere von den auswählbaren Achsen eine manipulatorexterne Achse (A7-A9), insbesondere zur Bewegung eines Werkstücks (2, 3), ist.

6. Verfahren nach einem der vorhergehenden Ansprüche, **gekennzeichnet durch** folgende Schritte:
- Erfassen einer Ist-Position der ausgewählten Achse zu Beginn der Stillstandsüberwachung als einer Soll-Stillstandsposition (S40); und
- Erfassen einer aktuellen Ist-Position der ausgewählten Achse und Vergleichen dieser aktuellen Ist-Position mit der Soll-Stillstandsposition während der Stillstandsüberwachung (S80).

7. Verfahren nach Anspruch 6, **dadurch gekennzeichnet, dass** erfasst wird, dass die ausgewählte Achse nicht stillsteht, falls eine Differenz zwischen ihrer aktuellen Ist-Position (x_{A}) und der Soll-Stillstandsposition (x_{A}) einen vorgebbaren Grenzwert (Δ_{A}) übersteigt.

8. Verfahren nach einem der vorhergehenden Ansprüche, **dadurch gekennzeichnet, dass** während der Überwachung auf Stillstand eine mechanische Bremse auf die ausgewählte Achse wirkt.

9. Verfahren nach einem der vorhergehenden Ansprüche, **gekennzeichnet durch** folgende Schritte:
- Auswählen einer Gruppe von wenigstens zwei Achsen des Manipulatorsystems (S10);
- Überwachen von Achsen der ausgewählten Gruppe auf Stillstand (S80); und
- Trennen einer Achse der ausgewählten Gruppe von einer Energieversorgung (S100, S110), falls erfasst wird, dass diese Achse nicht stillsteht, wobei wenigstens eine nicht ausgewählte Achse weiter mit der Energieversorgung verbunden bleibt (S70).

10. Vorrichtung zum Steuern eines Manipulatorsystems, insbesondere eines Robotersystems, mit einer Steuereinrichtung zum Ansteuern der Achsen des Manipulatorsystems, **dadurch gekennzeichnet, dass** die Vorrichtung zur Durchführung eines Verfahrens nach einem der vorhergehenden Ansprüche eingerichtet ist.

11. Manipulatorsystem, welches wenigstens einen Manipulator, insbesondere einen Roboter (1; 10), sowie eine Vorrichtung nach Anspruch 10 umfasst.

12. Manipulatorsystem nach Anspruch 11, **dadurch gekennzeichnet, dass** es wenigstens eine manipulatorexterne Achse (A7-A9), insbesondere zur Bewegung eines Werkstücks, umfasst.

13. Computerprogramm, das ein Verfahren nach einem der Ansprüche 1 bis 9 ausführt, wenn es in einer Vorrichtung nach Anspruch 10 abläuft.

14. Computerprogrammprodukt mit Programmcode, der auf einem maschinenlesbaren Träger gespeichert ist und ein Computerprogramm nach Anspruch 13 umfasst.

## Claims

1. A method for controlling a manipulator system, in particular a robot system, comprising at least two drivable axes (A1 - A9; A1 - A4), which are connected for this to an energy supply, comprising the steps:
- selecting an axis of the manipulator system (S10) that should be stopped safely and be safeguarded against unexpected start-up;
- monitoring of the selected axis for standstill (S80), wherein the activation of the standstill-surveillance and/or the monitored standstill-position of the selected axis is variably predefinable depending on a state of the manipulator system, a position of a manipulator (1; 10), the time and/or a user input (1→ ctrl_{S,A}); and
- disconnecting the monitored axis from an energy supply (S100, S110), if it is determined that this axis is not standing still, wherein at least one not-selected axis is still connected with the energy supply (S70).

2. A method according to claim 1, **characterized in that** the selected axis is disconnected from the energy supply when it is determined that this axis in not standing still (S110).

3. A method according to claim 1, **characterized in that** the selected axis is disconnected only from the energy supply after this axis was stopped under energy supply (S100).

4. A method according to claim 2 and 3, **characterized in that** the selected axis is stopped under energy supply (S100), if it is determined that this axis is not standing still because of an external disturbance, and that otherwise the selected axis is disconnected from the energy supply as soon as it is determined that this axis is not standing still (S110).

5. A method according to one of the preceding claims, **characterized in that** at least one of the selectable axes is an axis (A1 - A6, A1 - A4) for movement of a working point of the manipulator of the manipulator system, and at least one of the other selectable axes is a manipulator-external axis (A7 - A9), in particular for movement of a work piece (2, 3).

6. A method according to one of the preceding claims, **characterized by** the following steps:
- determining a current position of the selected axis at the beginning of the standstill surveillance as a nominal standstill position (S40); and
- determining an actual current position of the selected axis and comparing this actual current position with the nominal standstill position during the standstill surveillance (S80).

7. A method according to claim 6, **characterized in that** it is determined that the selected axis is not standing still if a difference between its actual current position (x_{A}) and the nominal standstill position (x_{A}) exceeds a predefinable limit value (Δ_{A}).

8. A method according to one the preceding claims, **characterized in that** during the monitoring for standstill a mechanical brake affects the selected axis.

9. A method according to one of the preceding claims, **characterized by** the following steps:
- selecting a group of at least two axes of the manipulator system (S10);
- monitoring of axes of the selected group for standstill (S80); and
- disconnecting an axis of the selected group from an energy supply (S100, S110), if it is determined that this axis is not standing still, wherein at least one not selected axis still stays connected to the energy supply (S70).

10. A device for controlling a manipulator system, in particular a robot system, with a control means for controlling the axes of the manipulator system, **characterized in that** the device is adjusted for realization of a method according to one of the preceding claims.

11. A manipulator system, which comprises at least a manipulator, in particular a robot (1; 10), as well as a device according to claim 10.

12. A manipulator system according to claim 11, **characterized in that** it comprises at least one manipulator-external axis (A7 - A9), in particular for movement of a work piece.

13. A computer program, that realizes a method according to one the claims 1 to 9 if it runs in a device according to claim 10.

14. A computer program product with program code that is stored on a machinereadable carrier and that comprises a computer program according to claim 13.

## Revendications

1. Procédé de commande d'un système de manipulateur, notamment d'un système de robot, lequel comprend au moins deux axes entraînables (A1 - A9 ; A1 - A4) qui sont reliés à cet effet à une alimentation en énergie, le procédé comprenant les étapes suivantes consistant à :
- sélectionner un axe du système de manipulateur (S10), lequel axe doit être mis à l'arrêt en toute sécurité et empêché d'effectuer un démarrage intempestif ;
- vérifier si l'axe sélectionné est à l'arrêt (S80), l'activation de la vérification de l'arrêt et/ou la position à l'arrêt vérifiée de l'axe sélectionné pouvant être prédéfinie de manière variable en fonction d'un état du système de manipulateur, d'une position d'un manipulateur (1 ; 10), du temps et/ou d'une saisie de l'utilisateur (1→ctrl_{S.A}) ; et
- séparer l'axe vérifié d'une alimentation en énergie (S100, S110), s'il est détecté que cet axe n'est pas à l'arrêt, au moins un axe non sélectionné continuant à être relié à l'alimentation en énergie (S70).

2. Procédé selon la revendication 1, **caractérisé en ce que** l'axe sélectionné est séparé de l'alimentation en énergie, dès qu'il est détecté que cet axe n'est pas à l'arrêt (S110).

3. Procédé selon la revendication 1, **caractérisé en ce que** l'axe sélectionné n'est séparé de l'alimentation en énergie qu'une fois cet axe, alimenté en énergie, mis à l'arrêt (S110).

4. Procédé selon les revendications 2 et 3, **caractérisé en ce que** l'axe sélectionné, lorsqu'il est alimenté en énergie, est mis à l'arrêt (S100), s'il est détecté que cet axe n'est pas à l'arrêt en raison d'une perturbation extérieure, et **en ce que**, autrement, l'axe sélectionné est séparé de l'alimentation en énergie dès qu'il est détecté que cet axe n'est pas à l'arrêt (S110).

5. Procédé selon l'une quelconque des revendications précédentes, **caractérisé en ce qu'**au moins un des axes pouvant être sélectionnés est un axe (A1-A6, A1-A4) destiné à déplacer un point de fonctionnement d'un manipulateur du système de manipulateur, et au moins un autre des axes pouvant être sélectionnés est un axe (A7-A9) situé à l'extérieur du manipulateur, destiné en particulier à déplacer une pièce (2, 3).

6. Procédé selon l'une des revendications précédentes, **caractérisé par** les étapes suivantes consistant à :
- détecter une position réelle de l'axe sélectionné au début de la vérification de l'arrêt comme position d'arrêt théorique (S40) ; et
- détecter une position réelle actuelle de l'axe sélectionné et comparer cette position réelle actuelle à la position d'arrêt théorique pendant la vérification de l'arrêt (S80).

7. Procédé selon la revendication 6, **caractérisé en ce qu'**il est détecté que l'axe sélectionné n'est pas à l'arrêt, si une différence entre sa position réelle actuelle (x_{A}) et la position d'arrêt théorique (x_{A}) dépasse une valeur limite (Δ_{A}) pouvant être prédéfinie.

8. Procédé selon l'une des revendications précédentes, **caractérisé en ce qu'**un frein mécanique agit sur l'axe sélectionné pendant la vérification de l'arrêt.

9. Procédé selon l'une des revendications précédentes, **caractérisé par** les étapes suivantes consistant à :
- sélectionner un groupe d'au moins deux axes du système de manipulateur (S10) ;
- vérifier que les axes du groupe sélectionné sont à l'arrêt (S80) ; et
- séparer un axe du groupe sélectionné d'une alimentation en énergie (S100, S110), s'il est détecté que cet axe n'est pas à l'arrêt, au moins un axe non sélectionné continuant à être relié à l'alimentation en énergie (S70).

10. Dispositif de commande d'un système de manipulateur, en particulier d'un système de robot, pourvu d'un appareil de commande destiné à commander les axes du système de manipulateur, **caractérisé en ce que** le dispositif est conçu pour mettre en oeuvre un procédé selon l'une des revendications précédentes.

11. Système de manipulateur, lequel comprend au moins un manipulateur, en particulier un robot (1 ; 10), et un dispositif selon la revendication 10.

12. Système de manipulateur selon la revendication 11, **caractérisé en ce qu'**il comprend au moins un axe (A7-A9) situé à l'extérieur du manipulateur, destiné en particulier à déplacer une pièce.

13. Programme informatique, lequel exécute un procédé selon l'une des revendications 1 à 9, lorsqu'il se déroule dans un dispositif selon la revendication 10.

14. Produit-programme informatique pourvu d'un code de programme, lequel est mis en mémoire sur un support lisible par ordinateur et comprend un programme informatique selon la revendication 13.
